# EUROPÄISCHE PATENTSCHRIFT

(11) **EP 3 661 742 B1**
(45) Veröffentlichungstag und Bekanntmachung des Hinweises auf die Patenterteilung: **16.02.2022**
(21) Anmeldenummer: 18749330.9
(22) Anmeldetag: 27.07.2018
(51) Int. Cl.: C08K 3/30, C08L 27/18, B32B 15/00, B32B 5/02, B32B 5/16, B32B 7/12, B32B 15/02, B32B 15/085, B32B 15/16, B32B 15/18, B32B 27/06, B32B 27/32, F16C 33/20, B32B 27/12, C09D 127/18

(54) **METALL-KUNSTSTOFF-GLEITLAGERVERBUNDWERKSTOFF UND HIERAUS HERGESTELLTES GLEITLAGERELEMENT**
METAL-PLASTIC PLAIN-BEARING COMPOSITE MATERIAL AND PLAIN BEARING ELEMENT PRODUCED THEREFROM
MATÉRIAU COMPOSITE POUR PALIER LISSE EN MÉTAL/PLASTIQUE ET ÉLÉMENT DE PALIER LISSE FABRIQUÉ À PARTIR DE CE MATÉRIAU

(30) Priorität: 04.08.2017 DE 102017117736
(43) Veröffentlichungstag der Anmeldung: 10.06.2020
(73) Patentinhaber: KS Gleitlager GmbH, 68789 St. Leon-Rot (DE)
(72) Erfinder: TAIPALUS, Riitta, 67117 Limburgerhof (DE); REINICKE, Rolf, 76669 Bad Schoenborn (DE)
(74) Vertreter: DREISS Patentanwälte PartG mbB
(86) Internationale Anmeldenummer: PCT/EP2018/070407
(87) Internationale Veröffentlichungsnummer: WO 2019/025307

(56) Entgegenhaltungen:
- EP-A1- 2 532 905
- WO-A1-2014/049137
- WO-A1-2015/097158

## Beschreibung

Die Erfindung betrifft einen Metall/Kunststoff-Gleitlagerverbundwerkstoff insbesondere zur Herstellung von Gleitlagerelementen für geschmierte Anwendungen, mit einer metallischen Stützschicht, insbesondere aus Stahl oder Bronze, und mit einer in gleitendem Kontakt mit einem Gleitpartner stehenden Gleitschicht aus einem Gleitmaterial aus einer matrixbildenden PTFE-Polymerbasis mit die tribologischen Eigenschaften verbessernden Füllstoffen.

Im Stand der Technik sind eine Vielzahl von Gleitmaterialien bekannt, die beispielsweise auf PTFE-Basis beruhen und verschiedene Füllstoffe verwenden.

Beispielsweise ist der DE 10 2011 077 008 A1 ein Gleitlagerverbundwerkstoff auf PTFE-Basis beschrieben, wobei Füllstoffe umfassend Thermoplaste und/oder Duroplaste und weitere tribologisch wirksame Stoffe zusammen in compoundierter Form in der Polymerbasis des Gleitschichtmaterials vorliegen.

WO 2015/097158 A1 offenbart einen Metall/Kunststoff-Gleitlagerverbundwerkstoff der vorstehend genannten Art, wobei Zinksulfid und Bariumsulfat als Füllstoffe in einem Volumenverhältnis zwischen 0,1 und 15,7 enthalten sind und wobei wahlweise bis 40 Vol.-% weitere Füllstoffe enthalten sein können die ausgewählt sind aus einer Gruppe umfassend Duroplaste; Hochtemperaturthermoplaste wie Polyimid, Polyimidimid, PEEK, PPSO₂, PPS, voll- oder teilaromatische Polyamide oder Polyester oder ein Gemisch hieraus; Festschmierstoffe wie Graphit, Metallsulfid oder hexagonales Bornitrid; Pigmente wie Koks oder Eisenoxid; Faserstoffe wie Graphitkurzfasern oder Aramidfasern; und Hartstoffe wie Borcarbid oder Siliziumnitrid.

WO 2014/049137 A1 offenbart ein Gleitlager und mithin einen Gleitlagerverbundwerkstoff mit einer metallischen Stützschicht und mit einer darauf aufextrudierten Gleitschicht, die wenigstens zwei Polymere umfasst. Nach der weiteren Lehre dieser Druckschrift handelt es sich bei einem Polymer um ein thermoplastisches Fluorpolymer, insbesondere PTFE, wobei aber auch TFM, FEP, PFA, ETFE, MFA, ECTFE, PCTFE, PVDF oder eine Kombination hiervon genannt sind. Bei dem anderen zweiten Polymer handelt es sich um einen nicht fluorierten Thermoplasten. Als Beispiele hierfür sind PI, PAI, PPS, PPSO₂, LCP, PEK, PEEK, APE, PES angegeben. In einer langen Liste von Füllstoffen sind auch Bariumsulfat, Polyimid und Aramid genannt.

Des Weiteren ist aus der EP 2 316 707 A1 sowie der EP 1 647 574 A1 ein Gleitlagerverbundwerkstoff auf PTFE-Basis mit Bariumsulfat, Phosphat und einer Menge von 0,1 bis 2% Metallsulfid bekannt.

Die EP 0 938 970 B1 beschreibt einen Schichtverbundwerkstoff mit einer Matrix aus PTFE oder PTFE in Kombination mit ETFE, in die Füllstoffe eingelagert sind. Als Füllstoff kann insbesondere ein pulverförmiges Aramid eingesetzt werden. Das Aramid soll einen Anteil von 0,5 bis 10 Vol.-% aufweisen, wobei der Anteil der weiteren Füllstoffe 9,5 bis 44,5 Vol.-% beträgt und der Anteil der Polymerbasis 55 bis 90 Vol.-%. Darüber hinaus können als zusätzliche Füllstoffe Polyimide eingesetzt werden.

Schließlich beschreibt die DE 198 08 540 B4 einen Schichtverbundwerkstoff auf PTFE-Basis mit 10 - 50 Vol.-% eines pulverförmigen Aramids. Darüber hinaus können weitere Füllstoffe, z. B. Polyimid, eingesetzt sein. Das Material enthält nach einer Variante weitere Fluorthermoplasten. Trotz der Vielzahl an bekannten Gleitmaterialien besteht nach wie vor ein Bedarf an Gleitmaterialien, insbesondere als Lagermaterial für unter Fettschmierung bei hohen Lasten betriebene Anwendungen.

Insbesondere bei langsamen reversierenden Rotationsbewegungen besteht seither das Problem, dass bei den im Stand der Technik bekannten Metall/Kunststoff-Gleitlagerverbundwerkstoffen entweder ein zu hoher Verschleiß oder ein zu hoher Reibwert gegeben ist. Einen Metall/Kunststoff-Gleitlagerverbundwerkstoff bereitzustellen, der dieses Problem löst, ist Aufgabe der Erfindung.

Die Aufgabe wird durch einen Metall/Kunststoff-Gleitlagerverbundwerkstoff gelöst mit einer Gleitschicht aus einem Gleitmaterial aus einer matrixbildenden PTFE-Polymerbasis mit die tribologischen Eigenschaften verbessernden Füllstoffen, dadurch gekennzeichnet, dass das Gleitmaterial als Füllstoffe
1-15 Vol.-% Bariumsulfat,
5-20 Vol.-% Aramid,
1-10 Vol.-% Polyimid,
1-15 Vol.-% Fluorthermoplast außer PTFE,
enthält. Die Volumenanteile der Füllstoffe sind dabei bezogen auf das Gleitmaterial.

Derartige Metall/Kunststoff-Gleitlagerverbundwerkstoffe zeigen ein verbessertes Verhalten in hochbelasteten, geschmierten Applikationen mit niedrigen Gleitgeschwindigkeiten. Bei derartigen Anwendungsfällen handelt es sich in der Regel um langsame, reversierende Rotationsbewegungen, wie sie beispielsweise bei Sitzverstellern zu finden sind. Darüber hinaus kommen weiter Scharniere als Einsatzbereiche in Betracht. Der Einsatzzweck liegt vorzugsweise in motorfernen Anwendungen im Bereich Automobile.

Dabei dient Bariumsulfat dem Festigkeitsgewinn des Gleitmaterials, wobei Polyimid und Aramid die Verschleißfestigkeit erhöhen. Der Zusatz von einem oder mehreren Fluorthermoplasten außer PTFE zur verbessert die Haftwirkung und Einbindung aller weiteren Füllstoffe in der PTFE-Polymerbasis und dient somit als Haftvermittler.

Besonders bevorzugt ist dabei ein Gleitmaterial mit folgenden Füllstoffen:
- 1 bis 10 Vol.-% Bariumsulfat
- 10 bis 15 Vol.-% Aramid
- 1 bis 10 Vol.-%, insbesondere 1-8 Vol.-% Polyimid
- 1 bis 10 Vol.-%, insbesondere 1-8 Vol.-% Fluorthermoplast außer PTFE.

Weiter besonders bevorzugt ist ein Gleitmaterial, das als Füllstoffe
- 3 bis 7 Vol.-% Bariumsulfat,
- 10 bis 13 Vol.-% Aramid,
- 3 bis 8 Vol.-% Polyimid,
- 3 bis 7 Vol.-% Fluorthermoplast außer PTFE enthält.

Besonders bevorzugt ist es dabei, wenn die Fluorthermoplasten aus der Gruppe FEP, PFA oder MFA oder Kombinationen hiervon ausgewählt werden. Mit diesen Fluorthermoplasten wird eine besonders bevorzugte Modifikation der PTFE-Polymerbasis erreicht.

Besonders vorteilhaft ist hierbei, wenn das Aramid und/oder das Polyimid als pulverförmiger Zusatz eingebracht sind. Dabei werden das partikelförmige Aramid und/oder Polyimid in die Matrix eingelagert. Weiter bevorzugt ist es dabei, wenn die Partikelgröße des Aramid einen D50-Wert von 30 µm bis 90 µm für Aramid aufweist. Der Durchmesser der Aramidpartikel soll 200 µm nicht übersteigen. Der D50 Wert der Aramidpartikel wird bestimmt nach der Messmethode ISO 13320, Statische Laserstreulichtanalyse. Der D50-Wert der Partikelgröße des Polyimid soll vorzugsweise bei 1 µm bis 20 µm liegen und wird nach dem gleichen Verfahren bestimmt.

Für die Fluorthermoplasten, vorzugsweise FEP, soll für die Partikelgröße der D50-Wert bei 20 µm bis 80 µm liegen, ebenfalls bestimmt nach der ISO 13320.

Für den weiteren Füllstoff Bariumsulfat liegt der bevorzugte D50-Wert der Partikelgröße bei 0,2 µm bis 1,4 µm. Die Bestimmung erfolgt nach DIN 66111 und hier über die Partikelgrößenanalyse mittels Sedimentation. Dabei ist ein sehr niedriger Wert für Bariumsulfat besonders bevorzugt, da dies die Festigkeit des Gleitmaterials positiv beeinflusst.

Die Angabe D50 bezieht sich auf Massenprozente.

Unter einem Pulver wird dabei in Abgrenzung z.B. zu einer Faser ein Partikel mit einer Form verstanden, bei dem unter Zugrundelegung von Erstreckungen in drei Achsen die längste Erstreckung nicht mehr als fünfmal so lang ist wie die kürzeste Erstreckung, vorzugsweise nicht mehr als dreimal und weiter vorzugsweise nicht mehr als zweimal so lang.

Neben einer Pulverform können Aramid und/oder Polyimid auch faserförmig vorliegen und erfindungsgemäß eingesetzt werden. Bei der Faserform ist ein Verhältnis der Länge zum Durchmesser von größer 5:1.

Bevorzugt sind Verhältnisse der Volumenanteile von Aramid zu Polyimid von 15:1 bis 2:1 und vorzugsweise von 10:1 bis 3:1.

Bevorzugte Verhältnisse der Volumenanteile von Bariumsulfat zum einen oder mehreren Fluorthermoplasten sind 3:1 bis 1:3 und vorzugsweise 2:1 bis 1:2.

Der Zusatz von Fluorthermoplasten zur PTFE-Polymerbasis modifiziert das PTFE in einer Weise, dass die Haftung aller Bestandteile des Gleitmaterials untereinander verbessert ist, wodurch die Verschleißfestigkeit verbessert wird.

Besonders bevorzugt ist dabei vorgesehen, dass es sich um ein bleifreies Gleitmaterial handelt. Damit kann wichtigen Umweltaspekten Rechnung getragen werden.

Das Gleitmaterial ist dabei erfindungsgemäß Teil eines Metall/Kunststoff-Gleitlagerverbundwerkstoffs, insbesondere zur Herstellung von Gleitlagerelementen für geschmierte Anwendungen mit einer metallischen Stützschicht, insbesondere aus Stahl oder Bronze, und einer in gleitendem Kontakt mit einem Gleitpartner stehenden Gleitschicht. Bei derartigen Anwendungen handelt es sich um fettgeschmierte Anwendungen, die langsam rotierend oder reversierend ausgebildet sind und bei denen eine hohe Last aufgebracht wird bei einer langsamen Gleitbewegung. Derartige Gleitlagerverbundwerkstoffe werden im Kfz-Bereich, motorfern beispielsweise bei Scharnieren oder Sitzverstellern, eingesetzt.

Dabei ist es besonders bevorzugt, wenn das Gleitmaterial in einer auf der metallischen Stützschicht ausgebildeten porösen Trägerschicht, insbesondere in einer aus metallischen Partikeln aufgesinterten Trägerschicht, verankert ist.

Alternativ kann das Gleitmaterial unmittelbar an einer mikrostrukturiert ausgebildeten Oberfläche der metallischen Stützschicht verankert sein.

Weiterhin alternativ kann vorgesehen sein, dass das Gleitmaterial mittels einer Haftvermittlungsschicht auf der metallischen Stützschicht aufgebracht, vorzugsweise aufgeklebt ist.

Als weitere mögliche Variante ist auch ein Aufbringen des erfindungsgemäßen Gleitmaterials auf ein Metallgewebe oder -gitter, beispielsweise in Form eines Streckmetalls möglich. Diese können beispielsweise aus einem Bronzematerial bestehen. Die Metallgewebe oder - gitter, insbesondere das Streckmetall können als Stütz oder Trägerschicht eingesetzt werden.

Die Herstellung des Gleitmaterials kann dabei in verschiedener Weise erfolgen. So kann beispielsweise eine PTFE-Dispersion, der die Füllstoffe zugesetzt werden, ausgefällt werden, wodurch sich die PTFE-Polymerbasis mit den Füllstoffen vom Wasser trennt. Hierdurch entsteht eine Art Paste. Diese Paste kann auf den porösen Träger aufgebracht und darin eingewalzt werden und wird dann ausgesintert. Das Material wird dann in Streifen geschnitten und die so entstandenen Platinen werden zu Schalen oder Buchsen gewickelt.

Alternativ ist es auch möglich, insbesondere auch für dickere Schichten, PTFE-Pulver und Füllstoffe miteinander zu mischen. Das Material wird dann in eine im Wesentlichen zylindrische Form gefüllt und druckgesintert. Hierdurch entsteht ein Formkörper, aus dem durch Schälen eine Art Folie erhalten werden kann. Diese Folie kann dann auf die Stützschicht aufgebracht, insbesondere aufgeklebt werden.

Durch die Verwendung eines Gleitlagerverbundwerkstoffs mit einer Gleitschicht gemäß der vorstehend beschriebenen Art wird der Vorteil erreicht, dass für die oben beschriebenen Anwendungsfälle die Eigenschaften Reibung und Verschleiß in positiver Weise, d.h. in Richtung geringer Verschleiß und geringe Reibung, beeinflusst werden können.

Der Gleitlagerverbundwerkstoff ist weiterhin insbesondere so ausgebildet, dass die Schichtdicke der metallischen Stützschicht 0,15 bis 5 mm beträgt und die Schichtdicke der porösen Trägerschicht, sofern vorgesehen, wenigstens 0,05 mm, insbesondere wenigstens 0,1 mm, insbesondere wenigstens 0,2 mm und höchstens 0,6 mm, insbesondere höchstens 0,5 mm und dass der Überstand des Gleitmaterials über die poröse Trägerschicht wenigstens 10 µm, insbesondere wenigstens 20 µm und insbesondere wenigstens 30 µm, insbesondere wenigstens 50 µm, insbesondere wenigstens 100 µm und insbesondere höchstens 600 µm, insbesondere höchstens 500 µm, insbesondere höchstens 400 µm beträgt. Vorzugsweise ist der Überstand bei in das Material eingewalzten Gleitmaterialien auf Pastenbasis 5 - 80 µm, vorzugsweise 10 bis 50 µm und bei folienartigen Gleitmaterialien 100 - 400 µm und vorzugsweise 150 bis 300 µm.

Darüber hinaus wird Schutz beansprucht für ein Verfahren zum Herstellen eines Gleitmaterials für einen Metall/Kunststoff-Gleitlagerverbundwerkstoffs, insbesondere zur Herstellung von Gleitlagerelementen für geschmierte Anwendungen mit einer metallischen Stützschicht, insbesondere aus Stahl oder Bronze, und einer in gleitendem Kontakt mit einem Gleitpartner stehenden Gleitschicht aus einem Gleitmaterials basierend auf einer PTFE-Polymerbasis, wobei der PTFE-Polymerbasis die tribologischen

Eigenschaften verbessernde Füllstoffe in folgenden Anteilen und Partikelgrößen zugegeben werden:
- 1-15 Vol.-% Bariumsulfat,
- 5-20 Vol.-% Aramid,
- 1-10 Vol.-% Polyimid
- 1-15 Vol.-% Fluorthermoplast außer PTFE,
   und wobei die Partikel der zugegebenen im Wesentlichen sphärischen Füllstoffpartikel einen D50-Wert für
- Bariumsulfat von 0,2 - 1,4 µm
- Aramid von 30 - 90 µm
- Polyimid von 1- 20 µm
- Fluorthermoplast außer PTFE von 20 - 80 µm aufweisen.

Für Aramid beträgt vorzugsweise der Wert Dmax 200 µm.

Als Aramid wird bevorzugt Poly-Paraphenylene-Terephthalamid eingesetzt und als Fluorthermoplast FEP und hier ein Copolymer von Hexafluoropropylen und Tetrafluoroethylen.

Einzelheiten, Merkmale und Vorteile der Erfindung ergeben sich aus den beigefügten Ansprüchen und aus der zeichnerischen Darstellung und nachfolgenden Beschreibung bevorzugter Ausführungsformen der Erfindung.

In der Zeichnung zeigen:
- Figur 1: eine schematische Schnittansicht eines erfindungsgemäßen Gleitlagerverbundwerkstoffs;
- Figur 2: Messergebnisse zur Verschleißfestigkeit von Vergleichswerkstoffen und des erfindungsgemäßen Werkstoffs;
- Figur 3: Messergebnisse zum Reibwert von Vergleichswerkstoffen und dem erfindungsgemäßen Werkstoff; und

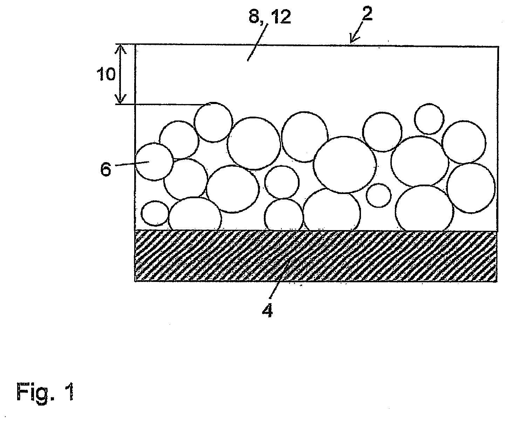

Figur 1 zeigt eine erfindungsgemäße Schnittansicht eines insgesamt mit dem Bezugszeichen 2 bezeichneten Gleitlagerverbundwerkstoffs. Dieser umfasst eine metallische Stützschicht 4, vorzugsweise und typischerweise aus Stahl. Darauf ist im beispielhaft und bevorzugt dargestellten Fall eine poröse Trägerschicht 6 in Form aufgesinterter Bronzepartikel einer beispielhaften Zusammensetzung Cu90Sn10 aufgesintert. In diese dreidimensional poröse Trägerschicht 6 ist ein Gleitmaterial 8 aus einer matrixbildenden PTFE-Polymerbasis aufgebracht, und zwar derart, dass das Gleitmaterial 8 einen Überstand 10 über die zuoberst liegenden Partikel der Trägerschicht 6 bildet. Das Gleitmaterial 8 bildet also eine dem Gleitpartner zugewandte Gleitschicht 12. Erfindungsgemäß umfasst das Gleitmaterial 1 bis 15 Vol.-% Bariumsulfat, 5 bis 20 Vol.-% Aramid, 1 bis 10 Vol.-% Polyimid, 1 bis 15 Vol.-% Fluorthermoplast, wobei der Rest durch die PTFE Polymerbasis gebildet ist. Die Füllstoffe verbessern dabei die tribologischen Eigenschaften. Neben Bariumsulfat, was der Festigkeit dient, und vorzugsweise in feinen Partikeln vorliegt, dienen das oder die Polyimide und das mindestens eine Aramid der Verbesserung der Verschleißfestigkeit des Werkstoffs. Der mindestens eine Fluorthermoplast wirkt dabei mit dem PTFE zusammen und modifiziert das PTFE so, dass die Füllstoffe besser eingebunden werden.

Es wäre auch denkbar, dass das Gleitmaterial 8 nicht in einer separat aufgebrachten Trägerschicht 6, sondern in einer mikrostrukturiert ausgebildeten Oberfläche der metallischen Stützschicht 4 verankert ist oder mittels einer klebenden Haftvermittlungsschicht auf die metallische Stützschicht 4 aufgeklebt ist.

Es wurden zu prüfende Buchsen des Aufbaus gemäß Figur 1 aus einem Gleitlagerverbundwerkstoff hergestellt, d.h. in einem Biegerollverfahren auf zylindrische Buchsenform mit einer Stoßfuge gebracht. Die Gleitschicht weist dabei die in der nachfolgenden Tabelle genannte Ausgestaltung auf. Die Prüfung der tribologischen Eigenschaften erfolgte mit nachfolgenden Prüfparametern. Die Gleitlager wurden in einem fettgeschmierten Lauf mit reversierender Rotationbewegung mit mittlerer Geschwindigkeit von 0,03 m/s getestet. Hierbei rotiert der Gleitlager um einen Gegenläufer. Die Kraft wird durch eine Federvorspannung eingeleitet und dabei wird das Gleitlager auf den Gegenkörper gedrückt.

Prüfparameter:

| Bewegungsart | Rotation, reversierend, ± 360° |
|---|---|
| F_{N} | 1500 N |
| v | 0,03 m/s |
| Schmierung | Fett, lithiumverseift |
| Wellen-Werkstoff | Sintermetall |
| Wellen-Rauheit, Rz | 2,5 µm |

Die Zusammensetzung des Gleitmaterials ist in der nachfolgenden Tabelle dargestellt. Die Angaben sind jeweils in Vol.-% bezogen auf das Gleitmaterial.

| Beispiel | PTFE | ZnS | C-Fasern | Aramid | BaSO4 | CaF2 | Fe203 | Polyimid | PFA |
|---|---|---|---|---|---|---|---|---|---|
| Ref. 1 | 75 | 25 | | | | | | | |
| Ref. 2 | 75 | 17 | 3 | | | | | | 5 |
| Ref. 3 | 75 | | | 3 (Fasern) | | 20 | 2 | | |
| 1 | 80 | | | 10 | 10 | | | | |
| 2 | 80 | | | 10 | | | | 10 | |
| 3 | 80 | | | | 10 | | | 10 | |
| 4 | 80 | | | 7 | 7 | | | 6 | |
| 5 | 80 | | | 10 | 5 | | | 5 | |
| 6 | 75 | | | 10 | 5 | | | 5 | 5 |

Dabei wurde die Referenz 1 als Vergleichsmuster herangezogen. Bei den Referenzen 1, 2 und 3 handelt es sich um Gleitmaterialien der Anmelderin, die als Stand der Technik vorbekannt sind. Die Beispiele 1 bis 5 entsprechen nicht erfindungsgemäßen Vergleichsbeispielen, wobei hier jeweils ein oder mehrere der vorgesehenen Füllstoffe gemäß der Erfindung nicht vorgesehen sind. Beispiel 6 ist ein erfindungsgemäßes Beispiel. Dabei wurden die Füllstoffe gemäß nachfolgender Spezifikation bezüglich der Partikelgrößen eingesetzt:

| | | **Partikel größe** | | |
|---|---|---|---|---|
| **Komponent** | | **Durchmes ser, D50 [µm]** | **Messmethode** | **Dichte [g/cm3]** |
| Aramid | Poly-paraphenylene - terephthalami d | 55 | ISO 13320 Statischen Laserstreulichtanalys e (SLS) | 1,44 |
| Bariumsulf at | | 0,7 | DIN 66111 Partikelgrößenanalyse über Sedimentation | 4,4 |
| Polyimid | | 7 | ISO 13320 | 1,38 |
| FEP | Copolymer of hexafluoropropylene and tetrafluoroethylene | 36 | ISO 13320 | 2,16 |

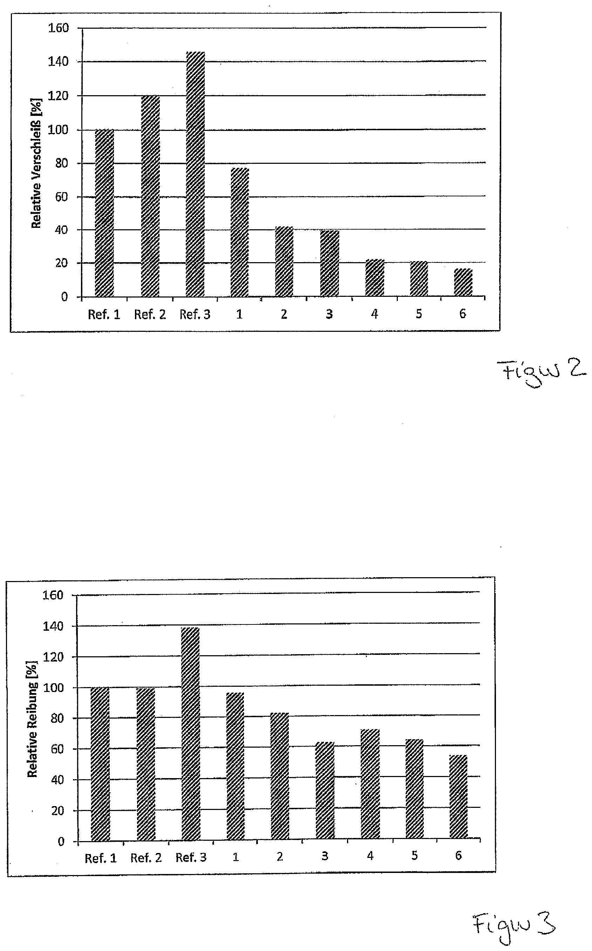

Figur 2 zeigt den relativen Verschleiß bezogen auf die Referenz 1. Dabei ist zu erkennen, dass Referenz 1 bei 100% liegt, wobei Referenz 2 noch ca. 20% schlechter abschneidet. Referenz 3, die Aramidfasern beinhaltet, zeigt noch schlechtere Verschleißwerte. Der Verschleiß verbessert sich dann bei den Beispielen 1 bis 6 und erreicht seinen geringsten und damit besten Wert beim erfindungsgemäßen Beispiel (Beispiel 6).

Figur 3 zeigt den relativen Reibwert, auch hier bezogen auf 100% bei Referenz 1. Auch hierbei ist zu erkennen, dass der relative Reibwert für das erfindungsgemäße Beispiel 6 am niedrigsten liegt und damit die besten Gleiteigenschaften erzielt werden.

## Patentansprüche

1. Metall/Kunststoff-Gleitlagerverbundwerkstoff (2) insbesondere zur Herstellung von Gleitlagerelementen für geschmierte Anwendungen, mit einer metallischen Stützschicht (4), insbesondere aus Stahl oder Bronze, und mit einer in gleitendem Kontakt mit einem Gleitpartner stehenden Gleitschicht (12) aus einem Gleitmaterial (8) aus einer matrixbildenden PTFE-Polymerbasis mit die tribologischen Eigenschaften verbessernden Füllstoffen, **dadurch gekennzeichnet, dass** das Gleitmaterial als Füllstoffe
1-15 Vol.-% Bariumsulfat,
5-20 Vol.-% Aramid,
1-10 Vol.-% Polyimid,
1-15 Vol.-% Fluorthermoplast außer PTFE,
enthält.

2. Metall/Kunststoff-Gleitlagerverbundwerkstoff nach Anspruch 1, **dadurch gekennzeichnet, dass** das Gleitmaterial als Füllstoffe
1-10 Vol.-% Bariumsulfat,
10-15 Vol.-% Aramid,
1-10 Vol.-%, insbesondere 1-8 Vol.-% Polyimid,
1-10 Vol.-%, insbesondere 1-8 Vol.-% Fluorthermoplast außer PTFE,
enthält.

3. Metall/Kunststoff-Gleitlagerverbundwerkstoff nach Anspruch 1 oder 2, **dadurch gekennzeichnet, dass** das Gleitmaterial als Füllstoffe
3-7 Vol.-% Bariumsulfat,
10-13 Vol.-% Aramid,
3-8 Vol.-% Polyimid,
3-7 Vol.-% Fluorthermoplast außer PTFE,
enthält.

4. Metall/Kunststoff-Gleitlagerverbundwerkstoff nach einem der vorangehenden Ansprüche, **dadurch gekennzeichnet, dass** der Fluorthermoplast aus der Gruppe FEP, PFA oder MFA oder Kombinationen hiervon ausgewählt ist.

5. Metall/Kunststoff-Gleitlagerverbundwerkstoff nach einem der vorangehenden Ansprüche, **dadurch gekennzeichnet, dass** das Aramid und/oder das Polyimid pulverförmig und/oder faserförmig ist.

6. Metall/Kunststoff-Gleitlagerverbundwerkstoff nach einem der vorangehenden Ansprüche, **dadurch gekennzeichnet, dass** das Verhältnis der Volumenanteile der Füllstoffe Aramid zu Polyimid 15:1 bis 2:1 und vorzugsweise 10:1 bis 3:1 beträgt.

7. Metall/Kunststoff-Gleitlagerverbundwerkstoff nach einem der vorangehenden Ansprüche, **dadurch gekennzeichnet, dass** das Verhältnis der Volumenanteile der Füllstoffe Bariumsulfat zu Fluorthermoplast außer PTFE 3:1 bis 1:3 und vorzugsweise 2:1 bis 1:2 beträgt.

8. Metall/Kunststoff-Gleitlagerverbundwerkstoff nach einem der vorangehenden Ansprüche, **dadurch gekennzeichnet, dass** die im Wesentlichen sphärischen Füllstoffpartikel einen D50-Wert für Bariumsulfat von 0,2 µm bis 1,4 µm, für Aramid 30 µm bis 90 µm, für Polyimid 1 µm bis 20 µm, für Fluorthermoplast außer PTFE 20 µm bis 80 µm, aufweisen. Die D50 Werte wurden für Bariumsulfat nach der DIN 66111 und für Aramid, Polyimid und dem Fluothermoplast nach der ISO 13320 bestimmt.

9. Metall/Kunststoff-Gleitlagerverbundwerkstoff nach einem der vorangehenden Ansprüche, **dadurch gekennzeichnet, dass** die maximale Partikelgröße für Aramid Dmax < 200 µm ist.

10. Metall/Kunststoff-Gleitlagerverbundwerkstoff nach einem der vorangehenden Ansprüche, **dadurch gekennzeichnet, dass** das Gleitmaterial bleifrei ist.

11. Metall/Kunststoff-Gleitlagerverbundwerkstoff nach einem der vorangehenden Ansprüche, **dadurch gekennzeichnet, dass** das Gleitmaterial (8) in einer auf der metallischen Stützschicht (4) ausgebildeten porösen Trägerschicht (6), insbesondere in einer aus metallischen Partikeln aufgesinterten Trägerschicht (6) oder in einer Streckmetallschicht oder in einer Gewebeschicht verankert ist.

12. Metall/Kunststoff-Gleitlagerverbundwerkstoff nach einem der vorangehenden Ansprüche, **dadurch gekennzeichnet, dass** das Gleitmaterial (8) an einer mikrostrukturiert ausgebildeten Oberfläche der metallischen Stützschicht (4) verankert ist.

13. Metall/Kunststoff-Gleitlagerverbundwerkstoff nach einem der vorangehenden Ansprüche, **dadurch gekennzeichnet, dass** das Gleitmaterial (8) mittels einer Haftvermittlungsschicht auf die metallische Stützschicht (4) aufgebracht, vorzugsweise aufgeklebt ist.

14. Metall/Kunststoff-Gleitlagerverbundwerkstoff nach einem der vorangehenden Ansprüche, dass die Schichtdicke der metallischen Stützschicht (4) 0,15 - 5 mm beträgt, dass die Schichtdicke der porösen Trägerschicht (6) wenigstens 0,05 mm, insbesondere wenigstens 0,1 mm, insbesondere wenigstens 0,2 mm und höchstens 0,6 mm, insbesondere höchstens 0,5 mm beträgt, und dass der Überstand (10) des Gleitmaterials (8) über die poröse Trägerschicht (6) wenigstens 10 µm, insbesondere wenigstens 20 µm, insbesondere wenigstens 30 µm, insbesondere wenigstens 50 µm, insbesondere wenigstens 100 µm und höchstens 600 µm, insbesondere höchstens 500 µm, insbesondere höchstens 400 µm beträgt.

15. Gleitlagerelement hergestellt aus einem Gleitlagerverbundwerkstoff (2) nach einem der vorangehenden Ansprüche.

16. Gleitlagerelement nach Anspruch 15, **dadurch gekennzeichnet, dass** es eine Gleitleiste, ein Gleitschuh, oder Gleitkissen oder eine Gleitlagerschale oder Gleitlagerbuchse oder Gleitlagerbundbuchse ist.

17. Verfahren zum Herstellen eines Gleitmaterials für einen Metall/Kunststoff-Gleitlagerverbundwerkstoff nach einem der Ansprüche 1 bis 14, wobei der PTFE-Polymerbasis des Gleitmaterials die tribologischen Eigenschaften verbessernde Füllstoffe in folgenden Anteilen und Partikelgrößen zugegeben werden: 1-15 Vol.-% Bariumsulfat,
5-20 Vol.-% Aramid,
1-10 Vol.-% Polyimid,
1-15 Vol.-% Fluorthermoplast außer PTFE, und wobei die Partikelgrößen der zugegebenen im Wesentlichen sphärischen Füllstoffpartikel einen D50-Wert für Bariumsulfat von 0,2 µm bis 1,4 µm,
Aramid 30 µm bis 90 µm,
Polyimid 1 µm bis 20 µm,
Fluorthermoplast 20 µm bis 80 µm,
aufweist.

18. Verfahren nach Anspruch 17, **dadurch gekennzeichnet, dass** als Aramid ein Pulver mit maximalem Partikeldurchmesser Dmax < 200 µm eingesetzt wird.

## Claims

1. Metal/plastic plain bearing composite material (2), in particular for manufacturing plain bearing elements for lubricated applications, with a metallic support layer (4), in particular of steel or bronze, and with a sliding coating (12), in sliding contact with a sliding partner, comprising a sliding material (8) consisting of a matrix-forming PTFE polymer base with fillers to improve the tribological properties, **characterised in that** the sliding material contains as fillers
1-15 vol% barium sulphate,
5-20 vol% aramid,
1-10 vol% polyimide,
1-15 vol% fluorothermoplast excluding PTFE.

2. Metal/plastic plain bearing composite material according to claim 1, **characterised in that** the sliding material contains as fillers
1-10 vol% barium sulphate,
10-15 vol% aramid,
1-10 vol%, in particular 1-8 vol% polyimide,
1-10 vol%, in particular 1-8 vol% fluorothermoplast excluding PTFE.

3. Metal/plastic plain bearing composite material according to claim 1 or 2, **characterised in that** the sliding material contains as fillers
3-7 vol% barium sulphate,
10-13 vol% aramid,
3-8 vol% polyimide,
3-7 vol% fluorothermoplast excluding PTFE.

4. Metal/plastic plain bearing composite material according to one of the preceding claims, **characterised in that** the fluorothermoplast is selected from the group FEP, PFA or MFA or combinations thereof.

5. Metal/plastic plain bearing composite material according to one of the preceding claims, **characterised in that** the aramid and/or the polyimide is powder-formed and/or fibrous.

6. Metal/plastic plain bearing composite material according to one of the preceding claims, **characterised in that** the ratio of the volume fractions of the fillers aramid to polyimide is 15:1 to 2:1 and preferably 10:1 to 3:1.

7. Metal/plastic plain bearing composite material according to one of the preceding claims, **characterised in that** the ratio of the volume fractions of the fillers barium sulphate to fluorothermoplast excluding PTFE is 3:1 to 1:3 and preferably 2:1 to 1:2.

8. Metal/plastic plain bearing composite material according to one of the preceding claims, **characterised in that** the substantially spherical filler particles have a D50 value of 0.2 µm to 1.4 µm for barium sulphate, 30 µm to 90 µm for aramid, 1 µm to 20 µm for polyimide, 20 µm to 80 µm for fluorothermoplast excluding PTFE. The D50 values were determined according to DIN 66111 for barium sulphate and according to ISO 13320 for aramid, polyimide and the fluothermoplast.

9. Metal/plastic plain bearing composite material according to one of the preceding claims, **characterised in that** the maximum particle size for aramid is Dmax < 200 µm.

10. Metal/plastic plain bearing composite material according to one of the preceding claims, **characterised in that** the sliding material is lead-free.

11. Metal/plastic plain bearing composite material according to one of the preceding claims, **characterised in that** the sliding material (8) is anchored in a porous backing layer (6) formed on the metallic support layer (4), in particular in a sintered backing layer (6) of metallic particles or in an expanded metal layer or in a fabric layer.

12. Metal/plastic plain bearing composite material according to one of the preceding claims, **characterised in that** the sliding material (8) is anchored on a microstructured surface of the metallic support layer (4).

13. Metal/plastic plain bearing composite material according to one of the preceding claims, **characterised in that** the sliding material (8) is applied to, preferably bonded to the metallic support layer (4) by means of an adhesive coating.

14. Metal/plastic plain bearing composite material according to one of the preceding claims, [characterised in that] the layer thickness of the metallic support layer (4) is 0.15 - 5 mm, that the layer thickness of the porous backing layer (6) is at least 0.05 mm, in particular at least 0.1 mm, in particular at least 0.2 mm and at most 0.6 mm, in particular at most 0.5 mm, and that the elevation (10) of the sliding material (8) above the porous backing layer (6) is at least 10 µm, in particular at least 20 µm, in particular at least 30 µm, in particular at least 50 µm, in particular at least 100 µm and at most 600 µm, in particular at most 500 µm, in particular at most 400 µm.

15. Plain bearing element manufactured from a plain bearing composite material (2) according to one of the preceding claims.

16. Plain bearing element according to claim 15, **characterised in that** it is a sliding rail, a sliding shoe or sliding pad or a plain bearing shell or plain bearing bushing or plain bearing collar bushing.

17. Method for manufacturing a sliding material for a metal/plastic plain bearing composite material according to one of the preceding claims 1 to 14, wherein the fillers for improving the tribological properties are added to the PTFE polymer base of the sliding material in the following proportions and particle sizes:
1-15 vol% barium sulphate,
5-20 vol% aramid,
1-10 vol% polyimide,
1-15 vol% fluorothermoplast excluding PTFE, and wherein the particle sizes of the added substantially spherical filler particles have a D50 value of
0.2 µm to 1.4 µm for barium sulphate,
30 µm to 90 µm for aramid,
1 µm to 20 µm for polyimide,
20 µm to 80 µm for fluorothermoplast.

18. Method according to claim 17, **characterised in that** a powder with a maximum particle diameter Dmax < 200 µm is used as aramid.

## Revendications

1. Matériau composite métal/plastique (2) pour palier lisse, en particulier pour la fabrication d'éléments de palier lisse pour des utilisations lubrifiées, présentant une couche de support métallique (4), en particulier en acier ou en bronze, et une couche de glissement (12) qui est en contact de glissement avec un partenaire de glissement, en un matériau de glissement (8) constitué par une base polymère de PTFE formant matrice pourvue de charges améliorant les propriétés tribologiques, **caractérisé en ce que** le matériau de glissement contient, comme charges,
1 à 15 % en volume de sulfate de baryum,
5 à 2 % en volume d'aramide,
1 à 10% en volume de polyimide,
1 à 15 % en volume de thermoplastique fluoré autre que le PTFE,

2. Matériau composite métal/plastique pour palier lisse selon la revendication 1, **caractérisé en ce que** le matériau de glissement contient, comme charges,
1 à 10% en volume de sulfate de baryum,
10 à 15 % en volume d'aramide,
1 à 10% en volume de polyimide, en particulier 1 à 8 % en volume de polyimide,
1 à 10% en volume, en particulier 1 à 8 % en volume de thermoplastique fluoré autre que le PTFE.

3. Matériau composite métal/plastique pour palier lisse selon la revendication 1 ou 2, **caractérisé en ce que** le matériau de glissement contient
3 à 7 % en volume de sulfate de sodium,
10 à 13 % en volume d'aramide,
3 à 8 % en volume de polyimide,
3 à 7 % en volume de thermoplastique fluoré autre que le PTFE,

4. Matériau composite métal/plastique pour palier lisse selon l'une quelconque des revendications précédentes, **caractérisé en ce que** le thermoplastique fluoré est choisi dans le groupe comprenant FEP, PFA ou MFA ou des combinaisons de ceux-ci.

5. Matériau composite métal/plastique pour palier lisse selon l'une quelconque des revendications précédentes, **caractérisé en ce que** l'aramide et/ou le polyimide est pulvérulent et/ou fibreux.

6. Matériau composite métal/plastique pour palier lisse selon l'une quelconque des revendications précédentes, **caractérisé en ce que** le rapport des proportions en volume des charges aramide/polyimide est de 15:1 à 2:1, et de préférence de 10:1 à 3:1.

7. Matériau composite métal/plastique pour palier lisse selon l'une quelconque des revendications précédentes, **caractérisé en ce que** le rapport des proportions en volume des charges sulfate de baryum/thermoplastique fluoré est de 3:1 à 1:3, de préférence de 2:1 à 1:2.

8. Matériau composite métal/plastique pour palier lisse selon l'une quelconque des revendications précédentes, **caractérisé en ce que** les particules de charge essentiellement sphériques présentent une valeur D50 pour le sulfate de baryum de 0,2 µm à 1,4 µm, pour l'aramide de 30 µm à 90 µm, pour le polyimide de 1 µm à 20 µm, pour le thermoplastique fluoré de 20 µm à 80 µm, les valeurs D50 étant déterminées pour le sulfate de baryum conformément à la norme DIN 66111 et pour l'aramide, le polyimide et le thermoplastique fluoré conformément à la norme ISO 13320.

9. Matériau composite métal/plastique pour palier lisse selon l'une quelconque des revendications précédentes, **caractérisé en ce que** la dimension maximale des particules pour l'aramide est Dmax < inférieure à 200 µm.

10. Matériau composite métal/plastique pour palier lisse selon l'une quelconque des revendications précédentes, **caractérisé en ce que** le matériau de glissement est exempt de plomb.

11. Matériau composite métal/plastique pour palier lisse selon l'une quelconque des revendications précédentes, **caractérisé en ce que** le matériau de glissement (8) est ancré dans une couche de support poreuse (6) formée sur la couche de support métallique (4), en particulier dans une couche support poreuse (6) frittée à partir de particules métalliques, en particulier dans une couche de métal déployé ou dans une couche de tissu.

12. Matériau composite métal/plastique pour palier lisse selon l'une quelconque des revendications précédentes, **caractérisé en ce que** le matériau de glissement (8) est ancré sur une surface microstructurée de la couche de support métallique (4).

13. Matériau composite métal/plastique pour palier lisse selon l'une quelconque des revendications précédentes, **caractérisé en ce que** le matériau de glissement (8) est appliqué, de préférence collé, sur la couche de support métallique (4) au moyen d'une couche conférant de l'adhérence.

14. Matériau composite métal/plastique pour palier lisse selon l'une quelconque des revendications précédentes, **caractérisé en ce que** l'épaisseur de couche de la couche de support métallique (4) est de 0,15 à 5 mm, **en ce que** l'épaisseur de couche de la couche support poreuse (6) est d'au moins 0,05 mm, en particulier d'au moins 0,1 mm, en particulier d'au moins 0,2 mm et d'au plus 0,6 mm, en particulier d'au plus 0,5 mm, et **en ce que** la saillie (10) du matériau de glissement (8) sur la couche de support poreuse (6) est d'au moins 10 µm, en particulier d'au moins 20 µm, en particulier d'au moins 30 µm, en particulier d'au moins 50 µm, en particulier d'au moins 100 µm et d'au plus 600 µm, en particulier d'au plus 500 µm, en particulier d'au plus 400 µm.

15. Elément de palier lisse réalisé en un matériau composite (2) pour palier lisse selon l'une quelconque des revendications précédentes.

16. Elément de palier lisse selon la revendication 15, **caractérisé en ce qu'**il s'agit d'une bande de glissement, d'un patin ou d'un coussinet de glissement ou d'un coussinet de palier lisse ou d'une douille de palier lisse ou d'un coussinet lisse enroulé à collet.

17. Procédé de fabrication d'un matériau de glissement pour un matériau composite métal/plastique pour palier lisse selon l'une quelconque des revendications 1 à 14, dans lequel des charges améliorant les propriétés tribologiques sont ajoutées à la base polymère de PTFE du matériau de glissement dans les proportions et les tailles de particule suivantes
1 à 15 % en volume de sulfate de baryum,
5 à 20 % en volume d'aramide,
1 à 10 % en volume de polyimide,
1 à 15 % en volume de thermoplastique fluoré autre que le PTFE, et dans lequel les tailles de particule des particules de charge sensiblement sphériques ajoutées présentent une valeur D50
de 0,2 µm à 1,4 µm pour le sulfate de baryum,
de 30 µm à 90 µm pour l'aramide,
de 1 µm à 20 µm pour le polyimide,
de 20 µm à 80 µm pour le thermoplastique fluoré,

18. Procédé selon la revendication 17, **caractérisé en ce qu'**une poudre avec un diamètre de particule maximal Dmax < 200 µm est utilisée comme aramide.
